# EUROPÄISCHE PATENTSCHRIFT

(11) **EP 1 640 969 B1**
(45) Veröffentlichungstag und Bekanntmachung des Hinweises auf die Patenterteilung: **30.05.2007**
(21) Anmeldenummer: 05106195.0
(22) Anmeldetag: 07.07.2005
(51) Int. Cl.: G10L 15/06, G10L 15/14

(54) **Verfahren zur Sprecheradaption für ein Hidden-Markov-Modell basiertes Spracherkennungssystem**
Procedure of speaker adaptation for Hidden-Markov-Model based speech recognition system
Procédé de l'adaptation au locuteur pour un système de reconnaissance de la parole utilisant des modèls de markov cachés

(30) Priorität: 22.09.2004 DE 102004045979
(43) Veröffentlichungstag der Anmeldung: 29.03.2006
(73) Patentinhaber: SIEMENS AKTIENGESELLSCHAFT, 80333 München (DE)
(72) Erfinder: Astrov, Sergey, 81739 München (DE); Bauer, Josef, 80797 München (DE)

(56) Entgegenhaltungen:
- TAKAHASHI S ET AL: "Four-level tied-structure for efficient representation of acoustic modeling" ACOUSTICS, SPEECH, AND SIGNAL PROCESSING, 1995. ICASSP-95., 1995 INTERNATIONAL CONFERENCE ON DETROIT, MI, USA 9-12 MAY 1995, NEW YORK, NY, USA,IEEE, US, Bd. 1, 9. Mai 1995 (1995-05-09), Seiten 520-523, XP010625284 ISBN: 0-7803-2431-5
- ASTROV S: "MEMORY SPACE REDUCTION FOR HIDDEN MARKOV MODELS IN LOW-RESOURCE SPEECH RECOGNITION SYSTEMS" PROCEEDINGS OF THE INTERNATIONAL CONFERENCE ON SPOKEN LANGUAGE PROCESSING, 2002, Seiten 1585-1588, XP009031930
- GALES M J F: "Maximum likelihood linear transformations for HMM-based speech recognition" COMPUTER SPEECH AND LANGUAGE, ACADEMIC PRESS, LONDON, GB, Bd. 12, Nr. 2, April 1998 (1998-04), Seiten 75-98, XP004418764 ISSN: 0885-2308
- BUB U ET AL: "In-service adaptation of multilingual hidden-Markov-models" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, Bd. 2, 21. April 1997 (1997-04-21), Seiten 1451-1454, XP010226078 ISBN: 0-8186-7919-0

## Beschreibung

Die vorliegende Erfindung betrifft ein Verfahren zur Sprecheradaption für ein Hidden-Markov-Modell basiertes Spracherkennungssystem.

Spracherkennungssysteme können in vielen Bereichen eingesetzt werden. Mögliche Einsatzgebiete sind beispielsweise Dialogsysteme, um über Telefon eine rein sprachliche Kommunikation zwischen einem Sprecher und einer Auskunfts- oder Buchungsmaschine zu ermöglichen. Andere Anwendungsgebiete eines Spracherkennungssystems sind die Bedienung eines Infotainmentsystems im Auto durch den Fahrer oder die Steuerung eines Operationsassistenzsystems durch den Chirurgen, wenn die Benutzung einer Tastatur mit Nachteilen verbunden ist. Ein weiterer wichtiger Einsatzbereich sind Diktiersysteme, mit denen das Schreiben von Texten erleichtert und beschleunigt werden kann.

Die Erkennung der Sprache beliebiger Sprecher ist dabei ungleich schwieriger als die Erkennung bei einem bekannten Sprecher. Dies liegt an den großen Varianzen zwischen den Äußerungen verschiedener Sprecher. Aus diesem Grund gibt es sprecherabhängige und sprecherunabhängige Spracherkennungssysteme. Sprecherabhängige Spracherkennungssystem können nur von einem dem System bekannten Sprecher benutzt werden, erzielen aber für diesen Sprecher eine besonders gute Erkennungsleistung. Sprecherunabhängige Spracherkennungssysteme können von beliebigen Sprechern benutzt werden, jedoch bleibt die Erkennungsleistung hinter der eines sprecherabhängigen Spracherkennungssystem weit zurück. In manchen Anwendungsgebieten sind sprecherabhängige Spracherkennungssysteme nicht einsetzbar, wie beispielsweise bei den telefonischen Auskunfts- und Buchungssystemen. Ist der Benutzerkreis eines Spracherkennungssystems jedoch begrenzt, wie beispielsweise bei Diktiersystemen, wird häufig ein sprecherabhängiges Spracherkennungssystem eingesetzt.

Kommerziell erhältliche Spracherkennungssysteme arbeiten üblicherweise sprecherabhängig. Dabei wird das Spracherkennungssystem zunächst durch ein Training auf die Stimme des Sprechers adaptiert, bevor es verwendet werden kann.

In der Praxis werden häufig zwei Verfahren zur Sprecheradaption eingesetzt. Bei einem ersten Verfahren der Vokaltraktlängennormierung (VTLN) wird die Frequenzachse des Sprachspektrums linear gestreckt bzw. gestaucht, um das Spektrum dem eines Referenzsprechers anzugleichen.

Bei einem zweiten Verfahren bleibt das Sprachsignal unverändert. Stattdessen werden akustische Modelle des Spracherkennungssystems, meistens in Form von Referenzdaten eines Referenzsprechers, mittels einer linearen Transformation an den neuen Sprecher angepasst. Dieses Verfahren hat mehr freie Parameter und ist damit flexibler als die Vokaltraktlängennormierung.

Nachteilig beim zweiten Verfahren ist, dass die modifizierten Referenzdaten beim Ablauf des Sprecheradaptionsalgorithmus in mehreren Schritten zwischen- und endgespeichert werden müssen und somit viel Speicherplatz beanspruchen. Dies wirkt sich vor allem bei Anwendungen auf Geräten mit begrenzter Prozessorleistung und eingeschränktem Speicherplatz negativ aus, wie beispielsweise Mobilfunkendgeräten.

Ein weiteres Verfahren zur Sprecheradaption eines Hidden-Markov-Modell basierten Spracherkennungssystems wird in der Veröffentlichung TAKAHASHI S ET AL: "Four-level tied-structure for efficient representation of acoustic modeling" INTERNATIONAL CONFERENCE ON ACOUSTICS, SPEECH, AND SIGNAL PROCESSING 1995, ICASSP-95, DETROIT (USA), IEEE, 9. Mai 1995, Seiten 520-523, XP010625284, offenbart.

Der vorliegenden Erfindung liegt die Aufgabe zugrunde, ein Verfahren zur Sprecheradaption für ein Hidden-Markov-Modell basiertes Spracherkennungssystem anzugeben, mit dem der Speicherplatzbedarf und somit auch die benötigte Prozessorleistung erheblich verringert werden kann

Diese Aufgabe wird erfindungsgemäß durch ein Verfahren mit den in Anspruch 1 angegebenen Merkmalen und ein Steuerungsprogramm mit den in Anspruch 10 angegebenen Merkmalen gelöst. Vorteilhafte Weiterbildungen der Erfindung sind in den abhängigen Ansprüchen angegeben.

Entsprechend dem erfindungsgemäßen Verfahren zur Sprecheradaption für ein Hidden-Markov-Modell basiertes Spracherkennungssystem werden modifizierte Referenzdaten, die in einem Sprecheradaptionsalgorithmus zur Anpassung eines neuen Sprechers an einen Referenzsprecher verwendet werden, in komprimierter Form verarbeitet.

Entsprechend der vorliegenden Erfindung werden einzelne Bestandteile eines modifizierten Referenzdatenelements zusammengefasst und durch einen Eintrag einer Codebook-Tabelle ersetzt. Auf diese Weise kann eine einfach zu implementierende und effektive Komprimierung der modifizierten Referenzdaten erzielt werden.

Entsprechend einer vorteilhaften Weiterbildung ist der Sprecheradaptionsalgorithmus als eine Kombination eines Maximum-Likelihood-Linear-Regression (MLLR) Algorithmus und eines Heuristic-Incremental-Adaptation Algorithmus ausgeführt. Dies hat den Vorteil, dass einerseits eine schnelle Reduktion der mittleren Fehlerrate nach wenigen Adaptierungswörtern durch den MLLR- Algorithmus erreicht wird und andererseits ein stetiges Abnehmen der mittleren Fehlerrate mit zunehmender Anzahl von Adaptierungswörtern durch den HIA- Algorithmus erzielt wird.

Bei der Ausführung des erfindungsgemäßen Steuerungsprogramms werden durch die Programmablaufsteuerungseinrichtung modifizierte Referenzdaten, die in einem Sprecheradaptionsalgorithmus zur Anpassung eines neuen Sprechers an einen Referenzsprecher verwendet werden, in komprimierter Form verarbeitet.

Die vorliegende Erfindung wird nachfolgend an einem Ausführungsbeispiel anhand der Zeichnung näher erläutert. Es zeigt
- Figur 1: ein Diagramm mit den Ergebnissen verschiedener Sprecheradaptionsalgorithmen ohne Komprimierung,
- Figur 2: ein Diagramm mit den Ergebnissen des kombinierten MLLR und HIA Sprecheradaptionsalgorithmus mit und ohne Komprimierung.

Im vorliegenden Ausführungsbeispiel wird eine Sprecheradaption für ein Spracherkennungssystem anhand einer Kombination zwei verschiedener Sprecheradaptionsalgorithmen durchgeführt. Ein erster Algorithmus ist der Maximum-Likelihood-Linear-Regression (MLLR) Algorithmus, der in M. Gales, "Maximum likelihood linear transformations for HMM-based speech recognition", tech.rep., CUED/FINFENG/TR291, Cambridge Univ., 1997 beschrieben ist. Dieser Algorithmus gewährleistet einerseits eine schnelle und globale Sprecheradaptierung. Andererseits ist er nicht dazu geeignet eine große Menge von Trainingsdaten zu verarbeiten. Ein zweiter Algorithmus ist der Heuristic-Incremental-Adaptation (HIA) Algorithmus, der in U. Bub, J. Köhler, and B. Imperl, "In-service adaptation of multilingual hidden-markov-models", in *Proc. IEEE Int. Conf. On Acoustics, Speech, and Signal Processing (ICASSP),* vol.2, (München), pp. 1451-1454, 1997 beschrieben ist. Hierdurch wird eine detaillierte Sprecheradaptierung erreicht unter Nutzung einer großen Menge von Trainingsdaten. Daher ist es sinnvoll, die beiden Algorithmen zu kombinieren.

Der erste Algorithmus MLLR benötigt für eine Algorithmusiteration die Berechnung von 4 Vektormultiplikationen. Ein Vektor hat dabei üblicherweise die Dimension 24 und jedes Vektorelement ist mit 4 Bytes codiert. Somit entsteht bei jeder Algorithmusiteration ein Speicherplatzbedarf während der Sprecheradaption von 4 x 24 x 4 Bytes = 384 Bytes.

Der zweite Algorithmus HIA benötigt üblicherweise für eine Algorithmusiteration 1200 Vektoren mit der Dimension 24, wobei jedes Vektorelement mit 1 Byte codiert ist. Daraus ergibt sich ein Speicherplatzbedarf von 1200 x 24 x 1 Byte = 28,8 kBytes.

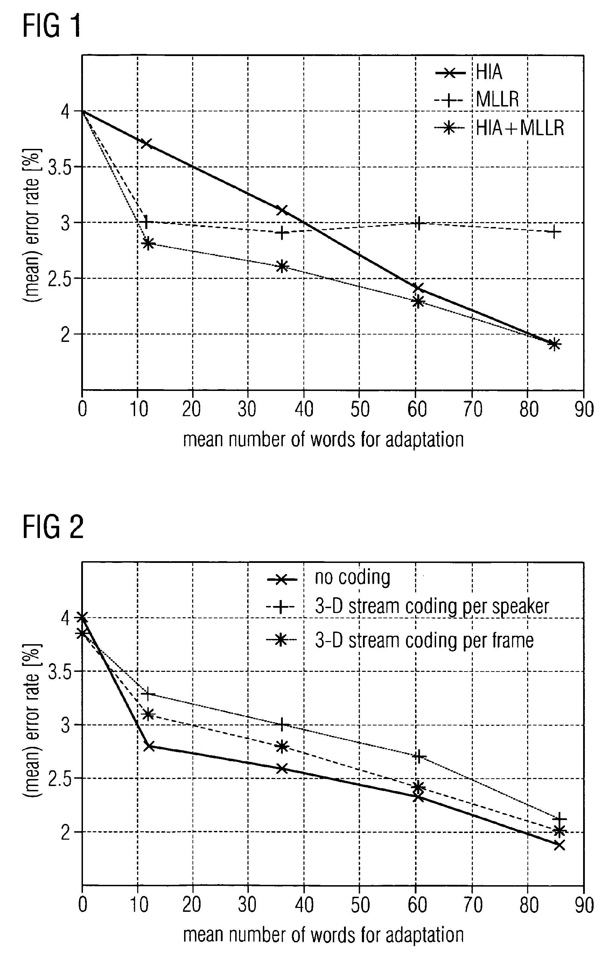

In Figur 1 sind die Resultate der verschiedenen Sprecheradaptierungsalgorithmen MLLR, HIA und MLLR + HIA ohne speicherplatzreduzierende Komprimierung dargestellt. Auf der Abszissenachse ist die mittlere Anzahl der für die Adaptierung benutzten Wörter und auf der Ordinatenachse die mittlere Fehlerrate für die Erkennungsleistung in Prozent aufgelistet. Es zeigt sich, dass der MLLR- Algorithmus zu einer sehr schnellen Sprecheradaptierung führt. Nach 10 Adaptierungswörtern ist eine maximale Fehlerrate von rund 30% erreicht. Der HIA-Algorithmus konvergiert sehr viel langsamer. Dafür nutzt er aber sehr viel effektiver eine größere Anzahl von Wörtern für die Adaptierung, das zu einer Reduktion der mittleren Fehlerrate auf rund 19% für 85 Adaptierungswörter führt. Die Kombination von MLLR- und HIA- Algorithmus verbindet die positiven Eigenschaften beider Algorithmen. Einerseits wird eine schnelle Reduktion der mittleren Fehlerrate nach wenigen Adaptierungswörtern und andererseits ein stetiges Abnehmen der mittleren Fehlerrate mit zunehmender Anzahl von Adaptierungswörtern erreicht.

Nun wird für den HIA- Algorithmus eine Speicherplatz reduzierende Komprimierung wie in der vorliegenden Erfindung vorgenommen. Dazu werden 3 aufeinander folgende Vektorelemente eines Vektors zu einer Vektorkomponente zusammengefasst. In einem Codebuch mit 256 Vektoren, die jeweils aus 3 Elementen bestehen, wird der Eintrag mit dem kleinsten euklidischen Abstand zur Vektorkomponente gesucht. Die Vektorkomponente wird durch den entsprechenden Indexeintrag aus dem Codebuch ersetzt, der 1 Byte Speicherplatz benötigt. Durch diese Speicherplatz reduzierende Komprimierung entsteht für eine Algorithmusiteration nunmehr ein Speicherplatzbedarf von 1200 x 8 x 1 Byte = 9600 Bytes. Der Speicherplatzverbrauch ist also um den Faktor 3 reduziert worden. Eine genaue Beschreibung des vorgenommenen Komprimierungsverfahrens findet sich in S.Astrov, "Memory space reduction for hidden markov models in low-resource speech recognition systems", in *Proc. Int. Conf. on Spoken Language Processing (ICSLP),* pp. 1585-1588, 2002.

Die Komprimierung ist in dem HIA- Verfahren nur auf die Endergebnisse nach Ablauf des Algorithmus anwendbar oder zusätzlich nach jeder Algorithmeniteration auf die Zwischenergebnisse des Algorithmus.

In Figur 2 sind die Resultate des kombinierten MLLR + HIA - Algorithmus mit und ohne speicherplatzreduzierende Komprimierung dargestellt. Auf der Abszissenachse ist die mittlere Anzahl der für die Adaptierung benutzten Wörter und auf der Ordinatenachse die mittlere Fehlerrate für die Erkennungsleistung in Prozent aufgelistet. Es zeigt sich, dass die Ergebnisse der komprimierten Sprecheradaptionsalgorithmen eine um rund 10% höhere mittlere Fehlerrate aufweisen. Der Sprecheradaptierungsalgorithmus mit einer Komprimierung der Zwischen- und Endergebnisse ("3d stream coding per frame") führt zu einer niedrigeren mittleren Fehlerrate und somit einer besseren Spracherkennungsleistung als der Sprecheradaptierungsalgorithmus mit einer Komprimierung nur der Endergebnisse ("3d stream coding per speaker").

In dem Ausführungsbeispiel wird ein MLLR- Algorithmus verwendet, der 384 Bytes Speicherplatz benötigt. Durch die Komprimierung der Vektoren im HIA- Algorithmus ist der Speicherplatzverbrauch von 28,8 kBytes auf 9600 Bytes um den Faktor 3 verringert worden. Demgegenüber steht eine Erhöhung der mittleren Fehlerrate und damit eine Verschlechterung der Erkennungsleistung von rund 10% im Vergleich zu einer Verwendung eines HIA- Algorithmus ohne Komprimierung. Dies erscheint aber akzeptabel im Hinblick auf die erzielte Reduzierung des Speicherplatzverbrauchs und der damit verbundenen geringeren benötigten Prozessorleistung.

## Patentansprüche

1. Verfahren zur Sprecheradaption für ein Hidden-Markov-Modell basiertes Spracherkennungssystem, wobei modifizierte Referenzdaten, die in einem Sprecheradaptionsalgorithmus zur Anpassung eines neuen Sprechers an einen Referenzsprecher verwendet werden, in komprimierter Form verarbeitet werden,
- wobei einzelne Bestandteile eines modifizierten Referenzdatenelements zusammengefasst werden und durch einen Eintrag einer Codebook-Tabelle ersetzt werden,
- wobei die Codebook-Tabelle als statische Tabelle ausgebildet ist.

2. Verfahren nach Anspruch 1,
wobei die modifizierten Referenzdaten als mehrdimensionale Merkmalsvektoren ausgebildet sind.

3. Verfahren nach mindestens einem der Ansprüche 1 und 2,
wobei die modifizierten Referenzdaten nach Ablauf des Sprecheradaptionsalgorithmus in komprimierter Form gespeichert werden.

4. Verfahren nach mindestens einem der Ansprüche 1 und 2,
wobei die modifizierten Referenzdaten während des Ablaufs des Sprecheradaptionsalgorithmus in komprimierter Form zwischen- und endgespeichert werden.

5. Verfahren nach mindestens einem der Ansprüche 1 bis 4,
wobei der Sprecheradaptionsalgorithmus als Maximum-Likelihood-Linear-Regression Algorithmus ausgeführt ist.

6. Verfahren nach mindestens einem der Ansprüche 1 bis 4,
wobei der Sprecheradaptionsalgorithmus als Heuristic-Incremental-Adaptation Algorithmus ausgeführt ist.

7. Verfahren nach mindestens einem der Ansprüche 1 bis 4,
wobei der Sprecheradaptionsalgorithmus als Maximum-A-Posteriori Algorithmus ausgebildet ist.

8. Verfahren nach mindestens einem der Ansprüche 1 bis 7,
wobei die modifizierten Referenzdaten durch ein verlustloses Komprimierungsverfahren komprimiert werden.

9. Verfahren nach Anspruch 1,
wobei die Codebook-Tabelle nicht als statische sondern als dynamische Tabelle ausgebildet ist.

10. Steuerungsprogramm, das in einem Arbeitsspeicher einer Programmablaufsteuerungseinrichtung ladbar ist und zumindest einen Codeabschnitt aufweist, bei dessen Ausführung modifizierte Referenzdaten, die in einem Sprecheradaptionsalgorithmus zur Anpassung eines neuen Sprechers an einen Referenzsprecher verwendet werden, in komprimierter Form verarbeitet werden, wenn das Steuerungsprogramm in der Programmablaufsteuerungseinrichtung abläuft,
- wobei einzelne Bestandteile eines modifizierten Referenzdatenelements zusammengefasst werden und durch einen Eintrag einer Codebook-Tabelle ersetzt werden,
- wobei die Codebook-Tabelle als statische Tabelle ausgebildet ist.

## Claims

1. Method of speaker adaptation for a Hidden Markov Model based voice recognition system, modified reference data used in a speaker adaptation algorithm for adapting a new speaker to a reference speaker being processed in compressed form,
- individual parts of a modified reference data element being combined and replaced by an entry in a codebook table,
- the codebook table being formed as a static table.

2. Method according to claim 1, the modified reference data being formed as multidimensional characteristic vectors.

3. Method according to at least one of claims 1 and 2, the modified reference data being saved in compressed form after execution of the speaker adaptation algorithm.

4. Method according to at least one of claims 1 and 2, the modified reference data being buffered and permanently saved in compressed form during execution of the speaker adaptation algorithm.

5. Method according to at least one of claims 1 to 4, the speaker adaptation algorithm being executed as a Maximum Likelihood Linear Regression algorithm.

6. Method according to at least one of claims 1 to 4, the speaker adaptation algorithm being executed as a Heuristic Incremental Adaptation algorithm.

7. Method according to at least one of claims 1 to 4, the speaker adaptation algorithm being formed as a Maximum A-Posteriori algorithm.

8. Method according to at least one of claims 1 to 7, the modified reference data being compressed by a loss-free compression procedure.

9. Method according to claim 1, the codebook table being formed not as a static table but as a dynamic table.

10. Control program which can be loaded into a main memory of a program execution control device and which has at least a code section, during execution of which modified reference data used in a speaker adaptation algorithm to adapt a new speaker to a reference speaker is processed in compressed form when the control program is running in the program execution control device,
- individual parts of a modified reference data element being combined and replaced by an entry in a codebook table,
- the codebook table being formed as a static table.

## Revendications

1. Procédé d'adaptation de locuteur pour un système de reconnaissance vocale basé sur le modèle Hidden-Markov, des données de référence, qui sont utilisées dans un algorithme d'adaptation de locuteur pour l'adaptation d'un nouveau locuteur à un locuteur de référence, étant traitées dans une forme comprimée,
- dans lequel des composants individuels d'un élément modifié de données de référence sont regroupés et étant remplacés par une inscription d'un tableau de Codebook,
- le tableau de Codebook étant conçu comme un tableau statique.

2. Procédé selon la revendication 1, les données de référence modifiées étant conçues comme des vecteurs de caractéristique pluridimensionnels.

3. Procédé selon au moins l'une quelconque des revendications 1 et 2, les données de référence modifiées étant stockées dans une forme comprimée après le déroulement de l'algorithme d'adaptation de locuteur.

4. Procédé selon au moins l'une quelconque des revendications 1 et 2, les données de référence modifiées étant stockées provisoirement et de façon définitive dans une forme comprimée pendant le déroulement de l'algorithme d'adaptation de locuteur.

5. Procédé selon au moins l'une quelconque des revendications 1 à 4, l'algorithme d'adaptation de locuteur étant conçu comme un algorithme Maximum-Likelihood-Linear-Regression.

6. Procédé selon au moins l'une quelconque des revendications des revendications 1 à 4, l'algorithme d'adaptation de locuteur étant conçu comme algorithme Heuristic-Incremental-Adaptation.

7. Procédé selon au moins l'une quelconque des revendications 1 à 4, l'algorithme d'adaptation de locuteur étant conçu comme algorithme Maximum-A-Posteriori.

8. Procédé selon au moins l'une quelconque des revendications 1 à 7, les données de référence modifiées étant comprimées par un procédé de compression sans perte.

9. Procédé selon la revendication 1, le tableau de Codebook étant conçu non pas comme un tableau statique, mais comme un tableau dynamique.

10. Programme de commande, qui peut être chargé dans une mémoire de travail d'un dispositif de commande de déroulement de programme et présente au moins une partie de code, lors de l'exécution de laquelle des données de références modifiées, qui sont utilisées dans un algorithme d'adaptation de locuteur pour l'adaptation d'un nouveau locuteur à un locuteur de référence, sont traitées dans une forme comprimée lorsque le programme de commande se déroule dans le dispositif de commande de déroulement de programme,
- dans lequel des composants individuels d'un élément modifié de données de référence étant regroupés et étant remplacés par une inscription d'un tableau de Codebook,
- le tableau de Codebook étant conçu comme un tableau statique.
